# EUROPÄISCHE PATENTSCHRIFT

(11) **EP 2 279 356 B1**
(45) Veröffentlichungstag und Bekanntmachung des Hinweises auf die Patenterteilung: **21.02.2018**
(21) Anmeldenummer: 09749628.5
(22) Anmeldetag: 20.05.2009
(51) Int. Cl.: F16B 19/10, B60R 13/02, F16B 21/07

(54) **VERBINDUNGSBAUGRUPPE ZUR BEFESTIGUNG EINES ANBAUELEMENTS AUF EINEM TRÄGER**
CONNECTION ASSEMBLY FOR FASTENING AN ATTACHMENT ELEMENT TO A SUPPORT
MODULE DE LIAISON PERMETTANT DE FIXER UN ÉLÉMENT À UN SUPPORT

(30) Priorität: 23.05.2008 DE 202008006958 U
(43) Veröffentlichungstag der Anmeldung: 02.02.2011
(73) Patentinhaber: Illinois Tool Works Inc., Glenview, IL 60025 (US)
(72) Erfinder: HOFMANN, Jürgen, 67304 Eisenberg (DE); LOEWE, Hubert, 66919 Weselberg (DE)
(74) Vertreter: Hauck Patentanwaltspartnerschaft mbB
(86) Internationale Anmeldenummer: PCT/EP2009/003606
(87) Internationale Veröffentlichungsnummer: WO 2009/141138

(56) Entgegenhaltungen:
- EP-A1- 1 323 932
- EP-A1- 1 717 458
- EP-A2- 1 630 426
- WO-A1-02/30710
- WO-A1-2009/063715
- DE-U1-202007 002 595
- US-A1- 2004 049 895

## Beschreibung

Die Erfindung betrifft eine Verbindungsbaugruppe zur Befestigung eines Anbauelements auf einem Träger, insbesondere zur Befestigung einer Türverkleidung an einem Türblech eines Kraftfahrzeugs.

Bekannte Verbindungsbaugruppen halten hohen Abzugskräften nicht uneingeschränkt Stand. Unter Abzugskraft ist hierbei die entgegen der Montagerichtung des Anbauelements gerichtete maximale Kraft zu verstehen, der die Verbindungsbaugruppe widerstehen kann, bevor das Anbauelement nicht mehr am Träger gehalten werden kann. Wenn besonders hohe Abzugskräfte gefordert werden, werden daher immer noch konventionelle Schraubverbindungen in Erwägung gezogen, die jedoch mit einer zeitaufwendigen Montage und Demontage verbunden sind.

Aus EP 1 717 458 A1 ist eine Anordnung zur Befestigung eines Motors an einer Tragfläche bekannt, bei der ein Stift in einem Sockelteil zwischen einer verriegelten Position, in der der Stift das Sockelteil an der Trägerplatte befestigt, und einer entriegelten Position, in der der Stift aus dem Sockelteil entfernt werden kann, gedreht werden kann.

DE 20 2007 002 595 U1 zeigt eine Befestigungsvorrichtung mit einem Befestigungsclip und einem Modulträgerteil. Der Befestigungsclip kann in eine Öffnung des Modulträgerteils eingeführt und durch Verdrehen am Modulträgerteil verriegelt werden.

EP 1 323 932 A1 beschreibt eine Verbindungsbaugruppe mit einem Pin, der mit einem Anbauelement verbunden werden und in einen Halteclip eingeschoben werden kann. Der Halteclip ist wiederum in eine Öffnung eines Trägerblechs einführbar. Der Halteclip weist elastische Arme auf, die in einer Zwischenposition der Verbindungsbaugruppe am unteren Schaftende des Pins anliegen. In einer Montageposition der Verbindungsbaugruppe bilden die elastischen Arme des Halteclips mit Vorsprüngen am Schaft des Pins eine Rastverbindung, um den Pin am Halteclip festzulegen. Die Verbindungsbaugruppe kann vom Trägerblech entfernt werden, indem am Pin gezogen wird. Der Pin nimmt dabei den Halteclip mit, so dass beide Teile aus der Öffnung des Trägerblechs entfernt werden. Eine nachträgliche Trennung des Pins vom Halteclip ist nicht vorgesehen.

WO 02/30710 A1 beschreibt eine Vorrichtung zur Verbindung eines Trägers mit einem Plattenelement umfassend ein Verbindungselement mit einem an dem Plattenelement befestigbaren Oberteil und einem mit dem Träger verbindbaren Unterteil, wobei zwischen dem Oberteil und dem Unterteil ein mit Verrastungselementen versehener, halsförmig ausgebildeter Zwischenbereich vorgesehen ist. Der Zwischenbereich des Verbindungselements weist dabei einen ersten Bereich und einen zweiten Bereich der Verrastungselemente auf, wobei in der Vormontage der erste Bereich und in der Endmontage der zweite Bereich der Verrastungselemente mit Gegenrastelementen des Zwischenteils verriegelt ist.

EP 1 630 426 A2 beschreibt eine Befestigungsvorrichtung zum Verbinden zweier Bauteile umfassend eine Klammer mit einem Flansch und einem Schaft und eine mit der Klammer zusammenwirkende Halteplatte, wobei das erste Bauteil zwischen Halteplatte und Flansch geklemmt wird, wenn der Schaft durch eine Öffnung im ersten Bauteil geführt wird, wobei weiterhin an dem Schaft ausgebildete elastische Schultern mit den Kanten einer weiteren Öffnung im zweiten Bauteil zusammenwirken.

WO 2009/063715 betrifft einen Clip für einen Airbag, umfassend eine Tülle und einen in die Tülle einsetzbaren Pin, wobei der Pin nur mit Hilfe eines Werkzeugs von der Tülle getrennt werden kann, indem das Werkzeug in einen Spalt zwischen der Fahrzeugkarosserie und dem Airbag eingeführt und die Seitenwände des Pins elastisch ausgelenkt werden.

Eine Verbindungsbaugruppe mit den Merkmalen des Oberbegriffs des Anspruchs 1 ist aus US 2004/049895 A1 bekannt.

Aufgabe der Erfindung ist es, die Nachteile einer Schraubverbindung zu vermeiden und eine kostengünstige Verbindungsbaugruppe schaffen, die extrem hohen Abzugskräften trotzt, aber dennoch eine reversible Befestigung des Anbauelements auf dem Träger gewährleistet.

Gelöst wird die Aufgabe durch eine Verbindungsbaugruppe mit den Merkmalen des Anspruchs 1. Vorteilhafte und zweckmäßige Ausgestaltungen der erfindungsgemäßen Verbindungsvorrichtung sind Gegenstand der Unteransprüche.

Da der Pin der erfindungsgemäßen Verbindungsbaugruppe sowohl in der Zwischenposition als auch in der Montageposition die gleiche Orientierung hat, ist bei der Montage der Verbindungsbaugruppe kein Drehen oder dergleichen des Pins erforderlich, was die Montage erschweren wurde. Darüber hinaus folgt die Erfindung der Überlegung, dass zur Demontage des Anbauelements keine vollständige Trennung des Pins vom Halteclip notwendig ist. Der Pin und der Halteclip sind so aufeinander abgestimmt, dass der Pin ausgehend von der Montageposition der Verbindungsbaugruppe mit vergleichsweise geringer Kraft, die aber immer noch grösser als die unter üblichen Fahrzeugbedingungen auftretenden Kräfte ist, in eine Zwischenposition abgezogen werden kann, in der dann auch bei Einwirkung sehr viel größerer Kräfte kein vollständiger Abzug des Pins möglich ist. Somit ist gewährleistet, dass das Anbauelement nach der Montage noch demontierbar ist (ohne Zerstörung einer oder mehrerer Komponenten der Verbindungsbaugruppe), sich aber auch unter extremen Bedingungen nicht in unerwünschter Weise vom Träger lösen kann.

Die ersten Rückhaltemittel sind am Pin als Hinterschnitte mit im Wesentlichen senkrecht zur Längsachse des Pins orientierten Halteflächen ausgeführt. Die zweiten Rückhaltemittel sind als Einkerbungen am Pin mit bezüglich der Längsachse des Pins geneigten Rampen ausgeführt.

Erfindungsgemäß ist der Pin in der Zwischenposition in eine von der ersten Orientierung verschiedene zweite Orientierung überführbar, in der die ersten Rückhaltemittel nicht mehr mit den komplementären Rückhaltemitteln zusammenwirken. Dadurch wird - nach einem Überführen der Verbindungsbaugruppe aus der Montageposition in die Zwischenposition - ein nachträgliches Entfernen des Pins vom Halteclip ermöglicht, zum Beispiel für den Fall, dass der Pin ausgetauscht werden soll.

Die Montage der Verbindungsbaugruppe kann dadurch vereinfacht werden, dass der Pin und das am Anbauelement befestigte Koppelteil aufeinander abgestimmte Orientierungsvorgabemittel aufweisen, die eine bestimmte Orientierung des Pins vorgeben.

Ebenso können der Halteclip und der Träger aufeinander abgestimmte Orientierungsvorgabemittel aufweisen, die die zweite Orientierung des Halteclips vorgeben. In Verbindung mit den Orientierungsvorgabemitteln des Pins und des Koppelelements kann so in besonders vorteilhafter Weise die erste Orientierung des Pins relativ zum Halteclip, in der die ersten bzw. zweiten Rückhaltemittel mit den komplementären Rückhaltemitteln zusammenwirken, erzwungen werden, so daß eine Fehlmontage ausgeschlossen ist.

Vorteilhaft ist auch eine am Halteclip vormontierte oder an den Halteclip angespritzte Dichtung, die die Montageöffnung und/oder einen Führungskanal des Halteclips, in den der Pin einführbar ist, abdichtet.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine perspektivische Draufsicht auf die Komponenten einer Verbindungsbaugruppe;
- Figur 2 eine perspektivische Unteransicht der Komponenten aus Figur 1;
- Figur 3 eine perspektivische Ansicht der Verbindungsbaugruppe in der Zwischenposition;
- Figur 4 eine seitliche Schnittansicht der Verbindungsbaugruppe in der Zwischenposition;
- Figur 5 eine perspektivische Ansicht der Verbindungsbaugruppe in der Montageposition;
- Figur 6 eine seitliche Schnittansicht der Verbindungsbaugruppe in der Montageposition;
- Figur 7 eine gegenüber Figur 6 um 90° gedrehte seitliche Schnittansicht der Verbindungsbaugruppe in der Montageposition; und
- Figur 8 eine perspektivische Ansicht der Verbindungsbaugruppe ohne Koppelteil in der Zwischenposition.

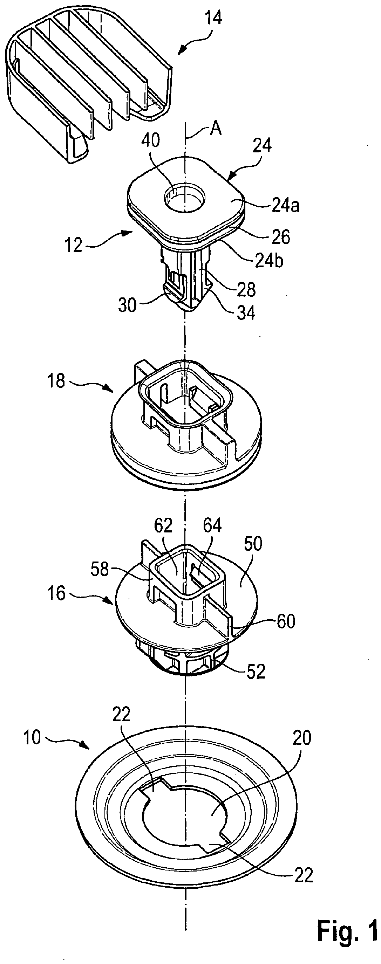

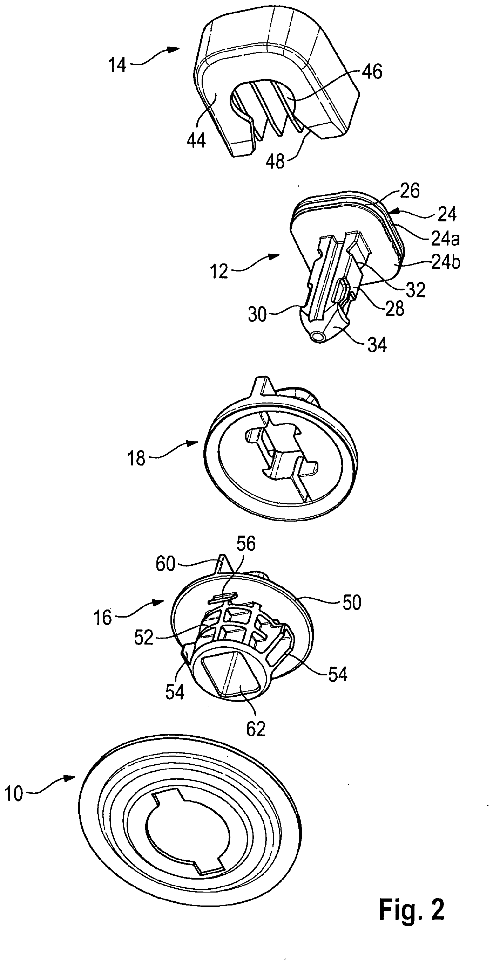

In den Figuren 1 und 2 sind die Komponenten einer Verbindungsbaugruppe zur Befestigung eines Anbauelements an einem Träger 10 einzeln gezeigt, wobei die Orientierung der Komponenten derjenigen im montierten Zustand der Verbindungsbaugruppe entspricht. Der Aufbau der Komponenten und deren Zusammenwirken werden im folgenden am Beispiel der Befestigung einer Türverkleidung an einem Türblech eines Kraftfahrzeugs beschrieben. Die Erfindung ist jedoch nicht auf diese Anwendung beschränkt, sondern kann auch für andere Zwecke eingesetzt werden.

Die Verbindungsbaugruppe umfaßt einen Pin 12 aus hartem Kunststoff, vorzugsweise POM-C (Polyoxymethylen-Copolymer), ein Koppelteil 14 (Retainer), einen Halteclip 16 aus hartem Kunststoff, vorzugsweise PBT GF (glasfaserverstärktes Polybutylenterephthalat) und eine optionale Dichtung 18 aus elastischem Kunststoff, vorzugsweise TPE-V (thermoplastisches Elastomer-Vulkanisat). Die Verbindungsbaugruppe ist dafür vorgesehen, ein am Koppelteil 14 befestigtes Anbauelement (Türverkleidung) mit einem mit einer Montageöffnung 20 versehenen Träger 10 (Türblech) zu verbinden.

Der Träger 10 und der Halteclip 16 weisen aufeinander abgestimmte Orientierungsvorgabemittel auf, die bei der Befestigung des Halteclips 16 am Träger 10 eine bestimmte Orientierung des Halteclips 16 relativ zum Träger 10 vorgeben. Im konkreten Fall ist die Montageöffnung 20 kreisförmig, weist jedoch an zwei diametral gegenüberliegenden Stellen rechteckförmige Ausnehmungen (Erweiterungen) 22 auf. Die zugehörigen Orientierungsvorgabemittel des Halteclips 16 werden später beschrieben. Das Koppelteil 14 und der Pin 12 weisen ebenfalls aufeinander abgestimmte Orientierungsvorgabemittel in Form bestimmter geometrischer Gestaltungen auf, die eine Anbringung des Pins 12 am Koppelteil 14 nur in einer bestimmten Orientierung des Pins 12 relativ zum Koppelteil 14 zulassen.

Der Pin 12 hat einen flachen länglichen, im wesentlichen rechteckigen, jedoch nicht quadratischen Kopf 24. Eine in Umfangsrichtung umlaufende Nut 26 unterteilt den Kopf 24 in einen oberen Teil 24a und einen unteren Teil 24b. Vom unteren Teil 24b des Kopfes 24 erstreckt sich ein länglicher Schaft 28 mit einem im wesentlichen quaderförmigen Grundkörper, der eine Längsachse A definiert.

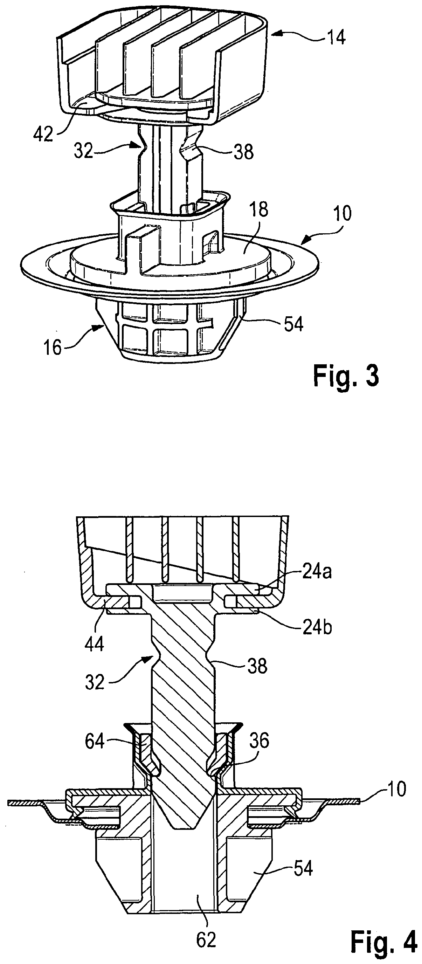

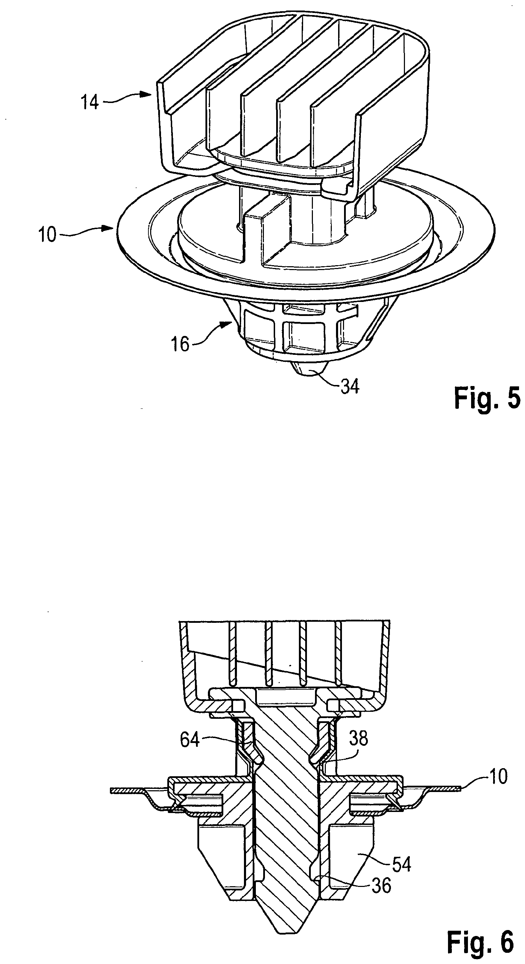

Der Pin 12 weist erste Rückhaltemittel 30 und zweite Rückhaltemittel 32 auf. Beide Rückhaltemittel 30, 32 sind jeweils an entgegengesetzten Seiten des Grundkörpers gebildet. Die ersten Rückhaltemittel 30 sind als Hinterschnitte des vom Kopf 24 abgewandten, konisch zulaufenden Schaftendes 34 mit im wesentlichen senkrecht zur Achse A orientierten Halteflächen 36 ausgeführt (siehe auch Figuren 4 und 6). Die zweiten Rückhaltemittel 32 sind als Einkerbungen mit bezüglich der Achse A geneigten Rampen 38 ausgeführt (siehe auch Figuren 3 und 4). Optional ist im Kopf 24 auf der vom Schaft 28 abgewandten Seite noch eine Aufnahme 40 für ein Schraubwerkzeug gebildet.

Das Koppelteil 14 weist einen Eingriffsbereich mit einer im wesentlichen rechteckigen, auf die Form des oberen Kopfteils 24a des Pins 12 abgestimmten Tasche 42 (siehe Figur 3) auf. Die Tasche 42 ist zu einer Seite offen und weist in einer ebenen axialen Stirnwand 44 eine Öffnung 46 und einen konisch auf die Öffnung zulaufenden Einführschlitz 48 auf. Da sowohl der Kopf 24 (wie auch der restliche Pin 12) und der Eingriffsbereich (wie auch das restliche Koppelteil 14) spiegelsymmetrisch ausgebildet sind, kann der obere Kopfteil 24a des Pins 12 bezüglich der Achse A in genau zwei Winkelstellungen in die Tasche 42 des Koppelteils 14 eingeführt werden. Da diese beiden Winkelstellungen 180° auseinanderliegen und die geometrischen Verhältnisse aufgrund der Symmetrie in diesen beiden Winkelstellungen identisch sind, werden beide Winkelstellungen als erste Orientierung des Pins 12 zusammengefaßt.

Es können auch andere Orientierungsvorgabemittel vorgesehen sein, die ein Anbringen des Pins 12 am Koppelteil 14, insbesondere ein Einführen des Pins 12 in das Koppelteil 14 bzw. ein Aufschieben des Koppelteils 14 auf den Pin 12, nur in der ersten Orientierung des Pins 12 relativ zum Koppelteil 14 zulassen, z.B. eine entsprechende Abstimmung der in die Nut 26 des Pins 12 eingreifenden Ränder der Stirnwand 44 auf die Form der Nut 26. Im Falle des spiegelsymmetrischen Pins 12 werden in Einklang mit der Definition der ersten Orientierung die beiden Winkelstellungen, die jeweils nach einer 90° Drehung relativ zu den ersten Winkelstellungen erreicht werden, als zweite Orientierung des Pins 12 zusammengefaßt.

Der Halteclip 16 weist einen tellerartigen Flansch 50 auf. Von der axialen Seite des Flanschs 50, die im montierten Zustand der Verbindungsbaugruppe der Montagöffnung 20 des Trägers 10 zugewandt ist (Unterseite), erstreckt sich eine erste Struktur 52 mit einem maximalen Außendurchmesser, der geringfügig kleiner als der Durchmesser der Montageöffnung 20 (ohne die Erweiterungen 22) im Träger 10 ist. Ferner sind Haltemittel 54 in Form von zwei einander diametral gegenüberliegenden, symmetrisch angeordneten Strukturabschnitten vorgesehen, die radial an die erste Struktur 52 angeformt sind und somit vom Rest der ersten Struktur 52 radial abstehen. Die Haltemittel 54 haben einen axialen Abstand vom Flansch 50, der etwa der Dicke des die Montageöffnung 20 umgebenden Randbereichs des Trägers 10 entspricht. Mit zunehmender axialer Entfernung vom Flansch 50 verjüngen sich die Haltemittel 54 bis auf den Außendurchmesser der restlichen ersten Struktur 52. Die Breite der Haltemittel 54 ist geringfügig kleiner als die der rechteckförmigen Erweiterungen 22 der Montageöffnung 20. Jeweils 90° versetzt zu den Haltemitteln 54 sind an der Unterseite des Flanschs 50 Orientierungsvorgabemittel in Form von zwei Rastlaschen 56 vorgesehen, deren Breite ebenfalls auf die Erweiterungen 22 der Montageöffnung 20 abgestimmt ist.

Auf der anderen axialen Seite des Flanschs 50, die im montierten Zustand vom Träger 10 abgewandt ist (Oberseite), erstrecken sich eine im wesentlichen rechteckige zweite Struktur 58 und zwei diametral gegenüberliegende Wandabschnitte 60, die als Drehhilfe dienen. Die beiden Strukturen 52, 58 und der Flansch 50 sind von einem Führungskanal 62 mit einem im wesentlichen rechteckigen Querschnitt durchsetzt. Im Führungskanal 62 sind an zwei gegenüberliegenden Innenwandabschnitten der zweiten Struktur 58 zu den ersten und zweiten Rückhaltemitteln 30, 32 des Pins 12 komplementäre Rückhaltemittel 64 in Form von Rastvorsprüngen gebildet, die in radialer Richtung elastisch verformbar und schwenkbar sind.

Die Dichtung 18 ist komplementär zu der vom Träger 10 abgewandten Oberseite des Halteclips 16, genauer gesagt bildet sie einen Überzug für die Oberseite des Flanschs 50, die zweite Struktur 58 und die beiden Wandabschnitte 60. Die Dichtung 18 ist entweder auf dem Halteclip 16 vormontiert oder im Rahmen eines Zweikomponentenspritzgußverfahrens direkt an diesen angespritzt. Die Dichtung 18, die in beiden axialen Richtungen wirkt, ist kein notwendiger, aber sinnvoller Bestandteil der Verbindungsbaugruppe, insbesondere wenn die Montageöffnung 20 im Träger 10 und der Führungskanal 62 des Halteclips 16 gegen den Pin 12 abgedichtet werden sollen.

Zur Verbindung des Anbauelements mit dem Träger 10 wird einerseits der Halteclip 16 am Träger 10 befestigt und andererseits der Pin 12 an dem am Anbauelement befestigten Koppelteil 14 angebracht, bevor dann der Pin 12 in den Halteclip 16 eingedrückt wird.

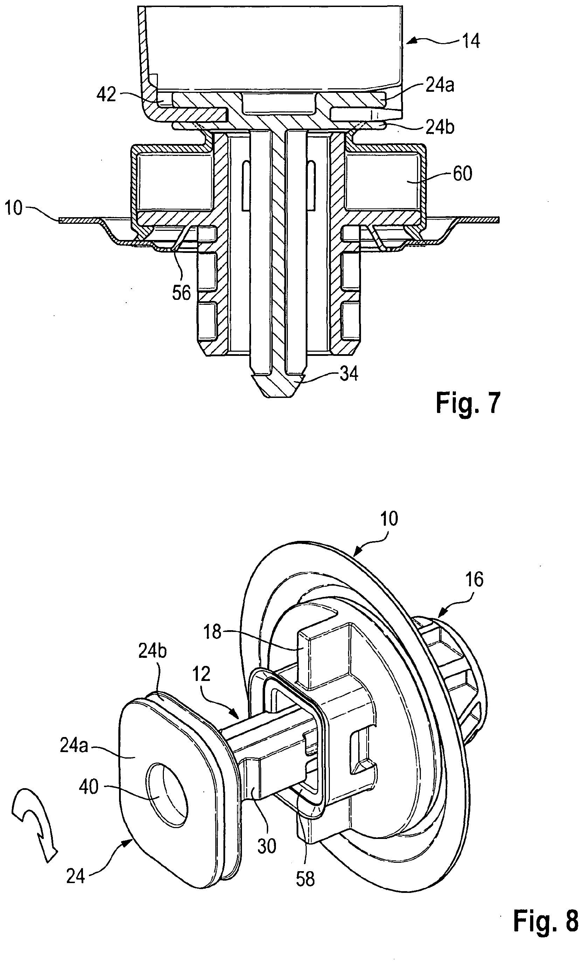

Der Halteclip 16 kann aufgrund der Haltemittel 54 (abstehende Strukturabschnitte) bezüglich der Achse A nur in zwei 180° auseinanderliegenden Winkelstellungen, die als erste Orientierung des Halteclips 16 zusammengefaßt werden, in die Montageöffnung 20 des Trägers 10 eingeführt werden. Der Halteclip 16 wird so weit eingeführt, bis der Flansch 50 auf dem die Montageöffnung 20 umgebenden Randbereich des Trägers 10 aufliegt. Danach wird der Halteclip 16 um 90° im oder gegen den Uhrzeigersinn gedreht, wobei die leicht greifbare Drehhilfe in Form der beiden Wandabschnitte 60 die Drehung erleichtert, bis die Orientierungsvorgabemittel 56 des Halteclips 16 in die Erweiterungen 22 der Montageöffnung 20 einschnappen und den Halteclip 16 gegen eine weitere Drehung sichern. In dieser zweiten Orientierung des Halteclips 16, die in den Figuren 3 bis 7 gezeigt ist, hintergreifen die Haltemittel 54 den Rand der Montageöffnung 20, so daß der Halteclip 16 nicht vom Träger 10 abgezogen werden kann. Die Dichtung 18 sorgt dafür, daß kein Schmutz und keine Feuchtigkeit durch die Montageöffnung 20 ins Fahrzeuginnere eindringen können.

In den Figuren 3 und 4 ist auch der am Koppelteil 14 angebrachte Pin 12 zu sehen. Gemäß der bevorzugten Verwendung der Verbindungsbaugruppe ist das Koppelteil 14 so an der Türverkleidung befestigt, daß die Tasche 42 nach oben (in Fahrzeughochrichtung = z-Richtung) offen ist und die Öffnung 46 dem Türblech (Träger 10) zugewandt ist. Der obere Kopfteil 24a des Pins 12 ist in die Tasche 42 des Eingriffsbereichs eingeschoben. Es ist zu erkennen, daß die Ränder der Stirnwand 44, die den Einführschlitz 48 und die Öffnung 46 begrenzen, in die Nut 26 des Pins 12 eingreifen, d.h. der obere Kopfteil 24a befindet sich in der Tasche 42, während der untere Kopfteil 24b außen an der Stirnwand 44 des Koppelteils 14 anliegt. Wie bereits erwähnt, kann der Pin 12 aufgrund der aufeinander abgestimmten Formen der Tasche 42 und des Kopfes 24 nur in seiner ersten Orientierung eingeschoben werden. Somit liegt die Einbaulage des Anbauelements mit dem daran befestigten Koppelteil 14 die Orientierung des Pins 12 relativ zum an der Montageöffnung 20 des Trägers 10 befestigten Halteclip 16 fest.

Die durch die Orientierungsvorgabemittel vorgegebene erste Orientierung des Pins 12 relativ zum Halteclip 16 ist so gewählt, daß bei einem Einführen des Pins 12 in den Führungskanal 62 des Halteclips 16 zunächst die ersten Rückhaltemittel 30 des Pins 12 in Eingriff mit den komplementären Rückhaltemitteln 64 des Halteclips 16 kommen. Diese später noch genauer beschriebene Zwischenposition der Verbindungsbaugruppe ist in den Figuren 3 und 4 gezeigt. Weiteres Niederdrücken des Pins 12 in axialer Richtung unter Verformung oder Schwenken der komplementären Rückhaltemittel 64 bringt die Verbindungsbaugruppe in die endgültige Montageposition, die in den Figuren 5, 6 und 7 gezeigt ist.

In der Montageposition behält der Pin 12 seine erste Orientierung bei, so daß nun die zweiten Rückhaltemittel 32 des Pins 12 in Eingriff mit den komplementären Rückhaltemitteln 64 des Halteclips 16 kommen (siehe insbesondere Figur 6) und der untere Kopfteil 24b auf dem freien oberen Rand der zweiten Struktur 58 des Halteclips 16 aufliegt, der im dargestellten Ausführungsbeispiel noch von der Dichtung 18 überzogen ist. Die Dichtung 18 dichtet in der Montageposition somit auch den Führungskanal 62 gegen den unteren Kopfteil 24b des Pins 12 ab.

In der Montageposition ist die Verbindung des Anbauelements mit dem Träger 10 durch die miteinander zusammenwirkenden zweiten Rückhaltemittel 32 des Pins 12 und der komplementären Rückhaltemittel 64 des Halteclips 16 gegen eine Abzugskraft von etwa 130 N ± 30 N gesichert. Wie eingangs bereits erläutert, bezeichnet die Abzugskraft die maximale Kraft, die der Verbindungsbaugruppe widerstehen kann, bevor das Anbauelement nicht mehr am Träger 10 gehalten werden kann. Aufgrund der stabil ausgeführten Haltemittel 54 des Halteclips 16 ist die Abzugskraft hier bestimmt durch die entgegen der Einführrichtung des Pins 12 gerichtete maximale Kraft, der der Pin 12 widerstehen kann, bevor er nicht mehr vom Halteclip 16 gehalten werden kann. Die genannte Größenordnung der Abzugskraft gewährleistet eine sichere Verbindung einer Türverkleidung an einem Türblech unter üblichen Fahrzeugbedingungen.

Bei größeren Kräften, wie sie beispielsweise im Falle eines Seitenaufpralls auftreten können, drücken die Rampen 38 die elastischen komplementären Rückhaltemittel 64 beiseite, so daß der Pin 12 bis in die Zwischenposition aus dem Halteclip 16 herausgleitet. In der Zwischenposition liegen die komplementären Rückhaltemittel 64 des Halteclips 16 an den zur Achse A senkrecht orientierten Halteflächen 36 der rechtwinkligen Kanten der ersten Rückhaltemittel 30 an (siehe Figur 4). In der Zwischenposition hält die Verbindungsbaugruppe deshalb einer Abzugskraft stand, die über 1000 N beträgt, also wesentlich höher ist als in der Montageposition. Dies gewährleistet, daß sich das Anbauelement (Türverkleidung) auch unter extremen Bedingungen nicht vollständig vom Träger 10 (Türblech) lösen kann.

Häufig muß ein Anbauelement nach der ersten Montage wieder ausgebaut werden, z.B. um bestimmte Einrichtungen hinter dem Anbauelement anzubringen oder um Wartungsarbeiten durchzuführen. Zu diesem Zweck muß am Anbauelement "nur" mit einer Kraft gezogen werden, die höher als die maximale Abzugskraft ist, der die Verbindungsbaugruppe in der Montageposition standhalten kann. Die Verbindungsbaugruppe geht dann in die Zwischenposition über, in der das Koppelteil 14 und mit ihm das Anbauelement problemlos vom Kopf 24 des Pins 12 abgezogen werden kann. In umgekehrter Reihenfolge kann das Anbauelement wieder auf den Kopf 24 des Pins 12 aufgeschoben und die Verbindungsbaugruppe durch vollständiges Niederdrücken wieder in die Montageposition überführt werden. Die Verbindungsbaugruppe ermöglicht somit nach dem ersten Anbringen des Anbauelements auf dem Träger 10, das Anbauelement zu entfernen und anschließend wieder einwandfrei auf dem Träger 10 zu befestigen.

Auch ein nachträgliches Entfernen des Pins 12 vom Halteclip 16 ist möglich. Wenn die Verbindungsbaugruppe wie zuvor beschrieben aus der Montageposition in die Zwischenposition überführt und das Koppelteil 14 vom Kopf 24 des Pins 12 abgezogen wird, ist der Kopf 24 des Pins 12 mit der Aufnahme 40 frei zugänglich. Durch Drehen des Kopfs 24 in die zweite Orientierung des Pins (hier eine Drehung um 90°), gegebenenfalls unter Zuhilfenahme eines in die Aufnahme 40 eingeführten Schraubwerkzeugs, gelangen die ersten Rückhaltemittel 30 des Pins 12 außer Eingriff mit den komplementären Rückhaltemitteln 64 des Halteclips 16. Der Pin 12 kann in seiner zweiten Orientierung somit problemlos aus dem Halteclip 16 abgezogen werden. Eine erneute Montage verläuft entsprechend der Erstmontage.

Aus der obigen Funktionsbeschreibung ist ersichtlich, daß die ersten und zweiten Rückhaltemittel 30, 32 auch am Halteclip 16 und die komplementären Rückhaltemittel 64 auch am Pin 12 vorgesehen sein können, ohne daß sich dadurch die grundsätzlichen Eigenschaften der Verbindungsbaugruppe ändern.

Im Anwendungsfall der Befestigung einer Türverkleidung an einem Türblech reicht es aus, nur eine oder wenige Verbindungsbaugruppen der oben beschriebenen Art an kritischen Stellen vorzusehen. An anderen Verbindungsstellen können einfache Trim-Clip-Verbindungen vorgesehen werden, die nur geringen Abzugskräften (in der Größenordnung 130 N) standhalten müssen. Bei solchen Trim-Clip-Verbindungen können kürzere Pins verwendet werden, die bereits vollständig abgezogen sind, wenn sich die oben beschriebene Verbindungsbaugruppe erst in der Zwischenposition befindet.

## Patentansprüche

1. Verbindungsbaugruppe zur Befestigung eines Anbauelements auf einem Träger (10), mit
einem Anbauelement,
einem Träger (10),
einem Halteclip (16), der in eine Montageöffnung (20) des Trägers (10) eingeführt und durch Haltemittel (54) axial am Träger (10) festgelegt ist, und
einem Pin (12), der reversibel an einem am Anbauelement befestigten Koppelteil (14) angebracht und in den Halteclip (16) eingeführt ist,
wobei der Pin (12) oder der Halteclip (16) erste Rückhaltemittel (30) aufweist, die in einer Zwischenposition der Verbindungsbaugruppe, in der der Pin (12) eine erste Orientierung zum Halteclip (16) hat und nicht vollständig in den Halteclip (16) eingeführt ist, mit komplementären Rückhaltemitteln (64) des Halteclips (16) bzw. des Pins (12) zusammenwirken, und
der Pin (12) oder der Halteclip (16) zweite Rückhaltemittel (32) aufweist, die anders als die ersten Rückhaltemittel (30) aufgeführt sind und in einer Montageposition der Verbindungsbaugruppe, in der der Pin (12) ebenfalls die erste Orientierung hat und vollständig in den Halteclip (16) eingeführt ist, mit den komplementären Rückhaltemitteln (64) des Halteclips (16) bzw. des Pins (12) zusammenwirken,
wobei die ersten Rückhaltemittel (30) und die zweiten Rückhaltemittel (32) sowie die komplementären Rückhaltemittel (64) so ausgelegt sind, daß die Abzugskraft des Pins (12) in der Zwischenposition größer ist als in der Montageposition,
wobei die ersten Rückhaltemittel (30) am Pin (12) als Hinterschnitte mit im Wesentlichen senkrecht zur Längsachse (A) des Pins (12) orientierten Halteflächen (36) ausgeführt sind, und
die zweiten Rückhaltemittel (32) als Einkerbungen am Pin (12) mit bezüglich der Längsachse (A) des Pins (12) geneigten Rampen (38) ausgeführt sind,
**dadurch gekennzeichnet, daß** der Pin (12) in der Zwischenposition in eine von der ersten Orientierung verschiedene zweite Orientierung überführbar ist, in der die ersten Rückhaltemittel (30) nicht mehr mit den komplementären Rückhaltemitteln (64) zusammenwirken.

2. Verbindungsbaugruppe nach einem der vorherigen Ansprüche, **dadurch gekennzeichnet, daß** die komplementären Rückhaltemittel (64) als Rastvorsprünge ausgeführt sind.

3. Verbindungsbaugruppe nach einem der vorhergehenden Ansprüche, **dadurch gekennzeichnet, dass** der Pin (12) und das Koppelteil (14) aufeinander abgestimmte Orientierungsvorgabemittel aufweisen, die eine bestimmte Orientierung des Pins (12) vorgeben.

4. Verbindungsbaugruppe nach Anspruch 3, **dadurch gekennzeichnet, daß** der Pin (12) einen Kopf (24) und das Koppelteil (14) eine Tasche (42) zur Aufnahme wenigstens eines Teils des Kopfs (24) aufweist und die Orientierungsvorgabemittel des Pins (12) und des Koppelteils (14) durch aufeinander abgestimmte Formgebungen des Kopfes (24) und der Tasche (42) gebildet sind.

5. Verbindungsbaugruppe nach einem der vorhergehenden Ansprüche, **dadurch gekennzeichnet, dass** die Haltemittel (54) des Halteclips (16) durch radial abstehende und axial von einem Flansch (50) beabstandete Strukturabschnitte gebildet sind, die so auf Erweiterungen (22) der Montageöffnung (20) abgestimmt sind, daß der Halteclip (16) nur in einer ersten Orientierung in die Montageöffnung (20) einführbar ist.

6. Verbindungsbaugruppe nach Anspruch 5, **dadurch gekennzeichnet, daß** der Halteclip (16) nach Einführen in die Montageöffnung (20) des Trägers (10) in eine zweite Orientierung überführbar ist, in der die Haltemittel (54) den Halteclip (16) axial am Träger (10) festlegen.

7. Verbindungsbaugruppe nach Anspruch 6, **dadurch gekennzeichnet, daß** der Halteclip (16) und der Träger (10) aufeinander abgestimmte Orientierungsvorgabemittel (22, 56) aufweisen, die die zweite Orientierung des Halteclips (16) vorgeben.

8. Verbindungsbaugruppe nach Anspruch 7, **dadurch gekennzeichnet, daß** die Orientierungsvorgabemittel des Halteclips (16) und des Trägers (10) durch Rastlaschen (56) gebildet sind, die in komplementäre Ausnehmungen (22) eingreifen.

9. Verbindungsbaugruppe nach einem der vorhergehenden Ansprüche, **gekennzeichnet durch** eine am Halteclip (16) vormontierte oder an den Halteclip (16) angespritzte Dichtung (18), die die Montageöffnung (20) und/oder einen Führungskanal (64) des Halteclips (16), in den der Pin (12) einführbar ist, abdichtet.

## Claims

1. Connection assembly for fastening an attachment element to a support (10), with
an attachment element,
a support (10),
a holding clip (16) which is inserted into an installation opening (20) of the support (10) and is secured axially on the support (10) by holding means (54), and
a pin (12) which is attached reversibly to a coupling part (14) fastened to the attachment element and is inserted into the holding clip (16),
wherein the pin (12) or the holding clip (16) has first retaining means (30) which, in an intermediate position of the connection assembly, in which the pin (12) has a first orientation with respect to the holding clip (16) and is not completely inserted into the holding clip (16), interact with complementary retaining means (64) of the holding clip (16) or of the pin (12), and the pin (12) or the holding clip (16) has second retaining means (32) which are designed differently from the first retaining means (30) and, in an installation position of the connection assembly, in which the pin (12) likewise has the first orientation and is completely inserted into the holding clip (16), interact with the complementary retaining means (64) of the holding clip (16) or of the pin (12),
wherein the first retaining means (30) and the second retaining means (32) and also the complementary retaining means (64) are designed in such a manner that the pull-off force of the pin (12) is greater in the intermediate position than in the installation position,
wherein the first retaining means (30) on the pin (12) are designed as undercuts with holding surfaces (36) orientated substantially perpendicularly to the longitudinal axis (A) of the pin (12), and
the second retaining means (32) are designed as notches on the pin (12) with ramps (38) inclined with respect to the longitudinal axis (A) of the pin (12),
**characterized in that**, in the intermediate position, the pin (12) is transferable into a second orientation which is different from the first orientation and in which the first retaining means (30) no longer interact with the complementary retaining means (64).

2. Connection assembly according to one of the preceding claims, **characterized in that** the complementary retaining means (64) are designed as latching projections.

3. Connection assembly according to either of the preceding claims, **characterized in that** the pin (12) and the coupling part (14) have mutually coordinated orientation-specifying means which predetermine a certain orientation of the pin (12).

4. Connection assembly according to Claim 3, **characterized in that** the pin (12) has a head (24) and the coupling part (14) has a pocket (42) for receiving at least part of the head (24), and the orientation-specifying means of the pin (12) and of the coupling part (14) are formed by mutually coordinated shapings of the head (24) and of the pocket (42).

5. Connection assembly according to one of the preceding claims, **characterized in that** the holding means (54) of the holding clip (16) are formed by radially protruding structural portions which are spaced apart axially from a flange (50) and are coordinated with extensions (22) of the installation opening (20) in such a manner that the holding clip (16) is insertable only in a first orientation into the installation opening (20).

6. Connection assembly according to Claim 5, **characterized in that** the holding clip (16), after insertion into the installation opening (20) of the support (10), is transferable into a second orientation in which the holding means (54) secure the holding clip (16) axially on the support (10).

7. Connection assembly according to Claim 6, **characterized in that** the holding clip (16) and the support (10) have mutually coordinated orientation-specifying means (22, 56) which predetermine the second orientation of the holding clip (16).

8. Connection assembly according to Claim 7, **characterized in that** the orientation-specifying means of the holding clip (16) and of the support (10) are formed by latching tabs (56) which engage in complementary recesses (22).

9. Connection assembly according to one of the preceding claims, **characterized by** a seal (18) which is preassembled on the holding clip (16) or is injection moulded onto the holding clip (16) and seals the installation opening (20) and/or a guide channel (64) of the holding clip (16), into which guide channel the pin (12) is insertable.

## Revendications

1. Module de liaison permettant de fixer un élément à un support (10), avec
un élément,
un support (10),
une attache de maintien (16), qui est introduite dans une ouverture de montage (20) du support (10) et qui est immobilisée axialement sur le support (10) par des moyens de maintien (54), et
une broche (12), qui est posée de façon réversible sur une pièce de couplage (14) fixée à l'élément et qui est introduite dans l'attache de maintien (16),
dans lequel la broche (12) ou l'attache de maintien (16) présente des premiers moyens de retenue (30), qui coopèrent avec des moyens de retenue complémentaires (64) de l'attache de maintien (16) ou de la broche (12) dans une position intermédiaire du module de liaison, dans laquelle la broche (12) présente une première orientation par rapport à l'attache de maintien (16) et n'est pas entièrement introduite dans l'attache de maintien (16), et
la broche (12) ou l'attache de maintien (16) présente des deuxièmes moyens de retenue (32), qui sont réalisés différemment des premiers moyens de retenue (30) et qui coopèrent avec des moyens de retenue complémentaires (64) de l'attache de maintien (16) ou de la broche (12) dans une position de montage du module de liaison, dans laquelle la broche (12) présente également la première orientation et est entièrement introduite dans l'attache de maintien (16), dans lequel les premiers moyens de retenue (30) et les deuxièmes moyens de retenue (32) ainsi que les moyens de retenue complémentaires (64) sont conçus de telle manière que la force d'extraction de la broche (12) soit plus grande dans la position intermédiaire que dans la position de montage,
dans lequel les premiers moyens de retenue (30) sur la broche (12) sont réalisés sous la forme de contre-dépouilles avec des faces de maintien (36) orientées essentiellement perpendiculairement à l'axe longitudinal (A) de la broche (12), et
les deuxièmes moyens de retenue (32) sont réalisés sous forme d'encoches sur la broche (12) avec des rampes (38) inclinées par rapport à l'axe longitudinal (A) de la broche (12),
**caractérisé en ce que** la broche (12) peut dans la position intermédiaire être transférée dans une deuxième orientation différente de la première orientation, dans laquelle les premiers moyens de retenue (30) ne coopèrent plus avec les moyens de retenue complémentaires (64).

2. Module de liaison selon l'une quelconque des revendications précédentes, **caractérisé en ce que** les moyens de retenue complémentaires (64) sont réalisés sous forme de saillies d'encliquetage.

3. Module de liaison selon l'une quelconque des revendications précédentes, **caractérisé en ce que** la broche (12) et la pièce de couplage (14) présentent des moyens de fixation d'orientation adaptés les uns aux autres, qui fixent une orientation déterminée de la broche (12).

4. Module de liaison selon la revendication 3, **caractérisé en ce que** la broche (12) présente une tête (24) et la pièce de couplage (14) présente un logement (42) destiné à recevoir au moins une partie de la tête (24) et les moyens de fixation d'orientation de la broche (12) et de la pièce de couplage (14) sont formés par des configurations adaptées l'une à l'autre de la tête (24) et du logement (42).

5. Module de liaison selon l'une quelconque des revendications précédentes, **caractérisé en ce que** les moyens de maintien (54) de l'attache de maintien (16) sont formés par des parties de structure radialement saillantes et axialement espacées d'une bride (50), qui sont adaptées à des élargissements (22) de l'ouverture de montage (20) de telle manière que l'attache de maintien (16) ne puisse être introduite dans l'ouverture de montage (20) que dans une première orientation.

6. Module de liaison selon la revendication 5, **caractérisé en ce que** l'attache de maintien (16) peut, après introduction dans l'ouverture de montage (20) du support (10), être transférée dans une deuxième orientation, dans laquelle les moyens de maintien (54) immobilisent l'attache de maintien (16) axialement sur le support (10).

7. Module de liaison selon la revendication 6, **caractérisé en ce que** l'attache de maintien (16) et le support (10) présentent des moyens de fixation d'orientation (22, 56) adaptés les uns aux autres, qui fixent la deuxième orientation de l'attache de maintien (16).

8. Module de liaison selon la revendication 7, **caractérisé en ce que** les moyens de fixation d'orientation de l'attache de maintien (16) et du support (10) sont formés par des pattes d'encliquetage (56), qui s'engagent dans des logements complémentaires (22).

9. Module de liaison selon l'une quelconque des revendications précédentes, **caractérisé par** un joint d'étanchéité (18) pré-monté sur l'attache de maintien (16) ou formé par projection sur l'attache de maintien (16), qui assure l'étanchéité de l'ouverture de montage (20) et/ou d'un canal de guidage (64) de l'attache de maintien (16), dans lequel la broche (12) peut être introduite.
